Europäisches Patentamt

European Patent Office

Office européen des brevets

(11) Publication number:

**0 377 121**
**A2**

(12) **EUROPEAN PATENT APPLICATION**

(21) Application number: **89122128.5**

(22) Date of filing: **30.11.89**

(51) Int. Cl.5: **A61J 1/00, C08L 23/04**

(30) Priority: **03.12.88 JP 306698/88**
**03.12.88 JP 306697/88**

(43) Date of publication of application:
**11.07.90 Bulletin 90/28**

(84) Designated Contracting States:
**AT BE CH DE ES FR GB IT LI SE**

(71) Applicant: **SHOWA DENKO KABUSHIKI**
**KAISHA**
**13-9, Shiba Daimon 1-chome**
**Minato-ku, Tokyo 105(JP)**

(72) Inventor: **Taka, Toshio,**
**c/o Showa Denko K.K., 3-2, Chidori-cho,**
**Kawasaki-ku, Kawasaki-shi, Kanagawa(JP)**
Inventor: **Ohkubo, Takuo,**
**c/o Showa Denko K.K., 3-2, Chidori-cho,**
**Kawasaki-ku, Kawasaki-shi, Kanagawa,(JP)**
Inventor: **Saito, Yoshimasa,**
**c/o Showa Denko K.K., 3-2, Chidori-cho,**
**Kawasaki-ku, Kawasaki-shi, Kanagawa,(JP)**

(74) Representative: **Henkel, Feiler, Hänzel &**
**Partner**
**Möhlstrasse 37**
**D-8000 München 80(DE)**

(54) **Medical bag.**

(57) A medical bag is disclosed which is made of a film mainly comprising low-density polyethylene and an ethylene/1-olefin copolymer, the film having a density of 0.920 g/cm$^3$ or less, containing at least 15% by weight of a component having a melting point of 117°C or less, and having a percent heat shrinkage of not more than 20% in the machine direction at 120°C. The medical bag is excellent in heat resistance, transparency, flexibility and appearance.

## MEDICAL BAG

### FIELD OF THE INVENTION

This invention relates to a medical bag for medical liquids, blood, etc. which has excellent physical properties such as hygienic qualities, flexibility, transparency, and heat resistance. More particularly, it relates to a medical bag comprising a film containing ethylene polymers as main components, which withstands heat treatment at 100°C or higher for sterilization of the content and possesses satisfactory hygienic qualities as well as transparency and flexibility.

### BACKGROUND OF THE INVENTION

Materials of flexible and transparent medical bags now available include polyvinyl chloride and ethylene/vinyl acetate copolymers having been crosslinked to have improved heat resistance, as described in JP-B-58-41862, JP-B-63-65339 and JP-B-1-44337. The term "JP-B" herein used means an "examined Japanese patent publication".

Polyvinyl chloride bags involve a hygienic issue raised by a large amount of plasticizer added for softening polyvinyl chloride which is rigid or by unreacted residual monomers. Bags made of an ethylene vinylacetate copolymer cause wrinkles upon sterilization to have a deteriorated appearance due to poor heat resistance.

One of the coinventors of this invention with others previously proposed a medical bag having a three-layered structure, namely, an intermediate layer comprising an ethylene/1-olefin copolymer having a low density, and outer and inner layers comprising low-density polyethylene or an ethylene/1-olefin copolymer having a higher density than the intermediate layer, as disclosed in U.S. Patent 4,775,562. However, since the film of this medical bag has a percent heat shrinkage of more than 20% in the machine direction (MD) at 120°C, it undergoes deterioration of transparency and flexibility due to slight heat shrinkage or heat deformation on its surface when heat-treated at 115°C or higher for sterilization. Moreover, when the film is made into bags, the sealing area also undergoes deformation due to heat shrinkage, giving rise to problems of productivity and appearance.

### SUMMARY OF THE INVENTION

An object of this invention is to provide a medical bag comprising ethylene polymers, which is free from the above-described disadvantages, i.e., has satisfactory hygienic qualities, markedly excellent flexibility and transparency as well as satisfactory heat resistance, and a satisfactory appearance free from wrinkles.

It has now been found that the above object of this invention can be accomplished by a medical bag made of a film mainly comprising a low-density polyethylene and an ethylene/1-olefin copolymer, the film having a density of $0.920$ g/cm$^3$ or less, containing at least 15% by weight (hereinafter referred to as "wt%") of a component having a melting point of 117°C or less, and having a percent heat shrinkage of not more than 20% in the machine direction (MD) at 120°C.

### DETAILED DESCRIPTION OF THE INVENTION

The low-density polyethylene, one of the main components of the film according to the present invention, usually has a density of $0.930$ g/cm$^3$ or less but preferably $0.920$ g/cm$^3$ or more, taking a sterilization temperature condition into consideration. The low-density polyethylene is so-called "high pressure process polyethylene" as described in Encyclopedia of Polymer Science and Technology, Vol. 6 (John Willy and Sons Inc. (1967)) and is comprised of a polymer main chain and long-chain branches which further contain branches therein. The terminology "long-chain branches" as used herein means branches having a chain length sufficiently comparable with the main chain length, for example, containing 15 or

2

more carbon atoms.

The ethylene/1-olefin copolymer, the other main component constituting the film of the present invention, (hereinafter merely referred to as "ethylene copolymer") usually has a density of not more than 0.920 g/cm³, preferably not more than 0.910 g/cm³, more preferably not more than 0.905 g/cm³. A preferred lower limit of the density is 0.890 g/cm³ in view of the latest technological level.

1-Olefins which can be used as a comonomer for preparation of the ethylene copolymer are generally 1-olefins containing 3 to 12 carbon atoms and preferably 3 to 8 carbon atoms, such as propylene, butene-1, hexene-1, 4-methylpentene-1 and octene-1. The copolymerization ratio of 1-olefin in the ethylene copolymer is preferably 8 to 15 mol% and more preferably 8 to 13 mol%. As the copolymerization ratio of the 1-olefin is increased, the density of the resulting copolymer is decreased.

The ethylene copolymer of the present invention is composed of a polymer main chain and short-chain branches. The terminology "short-chain branches" as used herein means branches having a sufficiently short length as compared with the main chain length, containing less than 15 carbon atoms, preferably 1 to 10 carbon atoms and more preferably 1 to 6 carbon atoms. The average degree of branching is preferably 2 to 70, more preferably 10 to 70 in terms of the number of branches per 1000 carbon atoms in the main chain.

In view of moldability and strength, the above-described low-density polyethylene and ethylene copolymer have a melt flow index (MFR) usually of from 0.1 to 20 g/10 min, preferably from 0.1 to 15 g/10 min, more preferably from 0.1 to 10 g/10 min, as measured according to Japanese Industrial Standard (JIS) K7210 under condition 4 (hereinafter the same).

The film of the present invention may be a film composed of a mixture of the low-density polyethylene and the ethylene copolymer (first embodiment), or a laminate film composed of a layer of the low-density polyethylene and a layer of the ethylene copolymer (second embodiment). In either case, the film or the layers may contain heat stabilizers, antioxidants, catalyst-neutralizing agents, etc. which are conventionally used in the art.

In the production of the film according to the first embodiment, the low-density polyethylene and ethylene copolymer are uniformly mixed at first. The mixing ratio varies depending on the physical properties of these polyethylene resins and should be selected so that the resulting film may satisfy the physical properties hereinafter described, and it is preferred that the ethylene copolymer be contained in an amount of 50 to 90 wt%, preferably 50 to 85 wt%, based on the total weight of the mixture.

Uniform mixing is carried out in a known manner commonly employed in the field of ethylene resins. For example, mixing may be dry blending using a mixing machine, e.g., a Henschel mixer and a ribbon blender, or melt-kneading using a kneader, an extruder, etc. A mixture having increased uniformity can be obtained by first dry blending followed by melt-kneading.

Melt-kneading is performed at a temperature at which both ethylene resins are melted. It should be noted, however, that when the temperature is too high, thermal deterioration of the low-density polyethylene and ethylene copolymer sometimes occurs. Taking this into consideration, the melt-kneading temperature is generally selected from the range of from 150 to 200° C.

The resulting mixture is then molded into a film by blown-film extrusion (including a water-cooling system and an air-cooling system), T-die extrusion, dry lamination, extrusion lamination, and the like. The film may have a single layer structure or a multi-layer structure comprising two or more layers.

The laminate film according to the second embodiment is composed of at least one layer of the low-density polyethylene and at least one layer of the ethylene copolymer, and it may be composed of three or more layers.

The thickness of the low-density polyethylene layer is preferably 10 to 50 μm, more preferably 10 to 40 μm, and the total thickness of the low-density polyethylene layers in the laminate film is preferably 10 to 50%, more preferably 15 to 50%, based on the whole thickness of the film. On the other hand, the thickness of the ethylene copolymer layer is preferably 100 to 400 μm, more preferably 100 to 300 μm, and the total thickness of the ethylene copolymer layers in the laminate film is preferably 50 to 90%, more preferably 50 to 85%, based on the whole thickness of the film.

It is preferred that the low-density polyethylene layer be laminated such that the layer is an inner layer of the medical bag, and the laminate film having the layer structure of low-density polyethylene layer/ethylene copolymer layer/low-density polyethylene layer is particularly preferred.

These layers can be laminated by a conventional methods such as blown-film co-extrusion (including a water-cooling system and an air-cooling system), T-die co-extrusion, dry lamination, extrusion lamination, and the like. From the economical standpoint, water-cooling system blown-film co-extrusion and T-die co-extrusion are preferred.

The film of the present invention (including both first and second embodiments) preferably contains as a whole 10 to 50 wt%, more preferably 15 to 50 wt%, of the low-density polyethylene and 50 to 90 wt%, more preferably 50 to 85 wt%, of the ethylene copolymer based on the weight of the film. The film (embraces a sheet having a thickness of more than 250 μm and) has a thickness usually ranging from 0.10 to 0.80 mm, preferably from 0.15 to 0.60 mm. If the film thickness is less than 0.10 mm, the film lacks massiveness, and if it exceeds 0.80 mm, the film lacks softness.

The film of this invention has the density of 0.920 g/cm$^3$ or less, but preferably not less than 0.890 g/cm$^3$ and more preferably not less than 0.895 g/m$^3$. When the density is more than 0.920 g/cm$^3$, crystalinity of the resulting film is high, so that the film does not exhibit good softness and transparency.

Further it is important for the film to contain at least 15 wt%, preferably at least 20 wt% but not more than 90 wt% and more preferably not more than 80 wt%, of a component whose melting point is 117°C or lower as measured with a differential scanning calorimeter (DSC) (hereinafter the same). The existence of at least 15 wt% of this component markedly improves moldability and processability in bag making.

It is also important in this invention that the film should have a percent heat shrinkage of not more than 20%, preferably not more than 18%, at 120°C in MD. The percent heat shrinkage is measured according to JIS Z1709 (1976) and calculated by the following formula

$$\text{Percent Heat Shrinkage (\%)} = \frac{Lo-L}{Lo} \times 100$$

wherein Lo is the length (100 mm) of a test sample and L is the length of the test sample after shrinkage (mm). If the percent heat shrinkage at 120°C in MD exceeds 20%, not only transparency and flexibility but appearance are impaired on heat treatment at 115°C or higher for sterilization. In addition, when such a film is made into a bag by heat sealing, the seal area undergoes deformation due to heat shrinkage.

The film of this invention is a peculiar film that contains a component having a melting point of 117°C or less in a high amount of 15 wt% or more but yet exhibits the percent heat shrinkage as low as 20% or less at 120°C in MD. The film having such peculiar properties cannot be obtained by film blowing under conventional conditions for ethylene resins but extraordinary conditions, for example, by film blowing the ethylene resins at an extremely high die temperature of 250 to 290°C, preferably 260 to 290°C and more preferably 260 to 285°C, and an extremely slow take-off speed of 2.0 to 4.0 m/min, preferably 2.0 to 3.5 m/min and more preferably 2.0 to 3.2 m/min.

The thus obtained film is heat-sealed to obtain a medical bag of a prescribed shape and size and having an opening for charging and discharging a medical liquid, blood, etc. The heat sealing is preferably performed at a temperature higher than the melting point (m.p.) of an inner layer of the medical bag but within the range of from (m.p. + 10°C) to (m.p. + 40°C).

The present invention is now illustrated in greater detail by way of Examples, but the present invention is not limited thereto. All the parts and ratios are given by weight unless otherwise indicated.

Physical properties of the films and appearances of medical bags were determined and evaluated as follows.

1) Density:

Density was measured at 23°C±0.1°C in accordance with JIS K7112, D method.

2) Melting Point:

Peak temperature in temperature rise at a rate of 10°C/min using a DSC was measured.

3) Flexibility

3-1) Modulus in tension was measured in accordance with ASTM D-882.
3-2) Spontaneous discharge property capable of allowing liquid contents in the medical bag to be discharged when hung on a hook was evaluated by visual observation.

4) Transparency:

4-1) Visual transparency was evaluated by naked eyes after the medical bag was filled with physiological saline, subjected to high-pressure steam sterilization at 115°C for 30 minutes and then to heat treatment at 40°C for 40 minutes.

4-2) Haze of the bag after the sterilization was measured in accordance with ASTM D-1003.

5) Percent Heat Shrinkage:

Percent heat shrinkage at 120°C in MD was measured in accordance with JIS Z1709.

6) Heat-Sealability and Appearance:

Heat-sealability of a film and an appearance of the medical bag were evaluated by observing wrinkles, deformation and breaks with eyes.

Each of the spontaneous discharge properties, visual transparency, heat-sealability and appearance which were visually observed was rated "excellent", "good", "poor", or "very poor".

Polymers used for preparation of films in Examples below were as follows.

PE(1): High pressure process low-density polyethylene (density: 0.927 g/cm$^3$; melting point: 114°C; MFR: 1.1 g/10 min).

PE(2): Ethylene/butene-1 copolymer (density: 0.909 g/cm$^3$; MFR: 1.2 g/10 min; average number of carbon atoms of alkyl group in short-chain branches: about 2; average degree of branching per 1000 carbon atoms in main chain: about 27; melting point: 121°C).

PE(3): Ethylene/butene-1 copolymer (density: 0.896 g/cm$^3$; MFR: 1.5 g/10 min; average number of carbon atoms of alkyl group in short-chain branches: about 2; average degree of branching per 1000 carbon atoms in main chain: about 35; melting point: 118°C).

PE(4): Ethylene/hexene-1 copolymer (density: 0.900 g/cm$^3$; MFR: 2.0 g/10 min; average number of carbon atoms of alkyl group in short-chain branches: about 4; average degree of branching per 1000 carbon atoms in main chain: about 35; melting point: 120°C).

## EXAMPLE 1 AND COMPARATIVE EXAMPLE 1

PE(1) and PE(2) were dry blended at a ratio of 20/80 to prepare mixture (A). The content of a component whose melting point was not higher than 117°C in mixture (A) is shown in Table 2 below.

An extruder having a diameter of 65 mm and two extruders each having a diameter of 40 mm were used for an intermediate layer and inner and outer layers, respectively. Mixture (A) was subjected to blown-film extrusion (take-off speed: shown in Table 1 below; blow-up ratio: 1.5) using these three extruders and a three-layer die (diameter: 150 mm; spiral structure; die temperature: shown in Table 1) and cooled by a water cooling ring to obtain a blown film comprising three layers having a total thickness of 250 μm, wherein the inner, intermediate and outer layers had the thicknesses of 30 μm, 190 μm and 30 μm, respectively.

## EXAMPLE 2 AND COMPARATIVE EXAMPLE 2

PE(1) and PE(3) were dry blended at a ratio of 40/60 to prepare a mixture (B). The content of a component whose melting point was not higher than 117°C is shown in Table 2 below.

Mixture (B) was subjected to T-die extrusion (take-off speed: shown in Table 1) using an extruder (diameter: 65 mm) equipped with a T-die (width: 600 mm; die temperature: shown in Table 1) and cooled by a chill roll to obtain a film having a thickness of 250 μm.

## COMPARATIVE EXAMPLES 3 AND 4

A film having a thickness of 250 μm was prepared from PE(1) alone (Comparative Example 3) or PE(2) alone (Comparative Example 4) by blown-film extrusion (take-off speed: shown in Table 1 below; blow-up ratio: 1.5) using an extruder (diameter: 65 mm) equipped with a die (diameter: 150 mm; single layer; spiral structure; die temperature: shown in Table 1) and cooled by an air cooling ring (blower: 3 HP).

In the above-described film formation, heat shrinkage of the film at 120°C was controlled by adjustment of take-off speed and die temperature.

Table 1

| Example No. | Die Temperature | Take-off Speed |
|---|---|---|
| | (°C) | (m/min) |
| 1 | 270 | 2.5 |
| 2 | 280 | 3.0 |
| Comp. Ex. 1 | 210 | 6.0 |
| Comp. Ex. 2 | 280 | 6.0 |
| Comp. Ex. 3 | 210 | 7.0 |
| Comp. Ex. 4 | 210 | 5.0 |

A 500 ml-volume medical bag was produced from each of the above-obtained films, and various characteristics of the bag were determined. The results obtained are shown in Table 2.

6

TABLE 2

| Example No. | Density (g/cm$^3$) | Percent Heat Shrinkage * (%) | Component of Melting Point of 117°C or less (wt%) | Flexibility | | Transparency | | Heat-Sealability | Appearance |
|---|---|---|---|---|---|---|---|---|---|
| | | | | Modulus in Tension (kg/cm$^2$) | Spontaneous Discharge Property | Visual Transparency | Haze (%) | | |
| 1 | 0.913 | 13 | 20 | 880 | good | good | 4.0 | good | good |
| 2 | 0.908 | 17 | 40 | 920 | good | good | 3.5 | good | excellent |
| Comp. Ex. 1 | 0.913 | 30 | 20 | 910 | good | poor | 4.3 | poor | very poor |
| Comp. Ex. 2 | 0.908 | 27 | 40 | 960 | good | poor | 3.8 | poor | very poor |
| Comp. Ex. 3 | 0.927 | 80 | 98 | 3,200 | very poor | very poor | 32.0 | poor | very poor |
| Comp. Ex. 4 | 0.909 | 12 | 5 | - | - | - | - | - | - |

Note *: In MD at 120°C

EP 0 377 121 A2

EP 0 377 121 A2

## EXAMPLE 3 AND 4 AND COMPARATIVE EXAMPLES 5 AND 6

An intermediate layer and inner and outer layers were prepared from the respective polymer shown in Table 4 below using an extruder having a diameter of 65 mm and two extruders each having a diameter of 40 mm, respectively, and subjected to blown-film extrusion (take-off speed: shown in Table 3 below; blow-up ratio: 1.5) using a three-layer die (diameter: 150 mm; spiral structure; die temperature: shown in Table 3), followed by cooling with a water cooling ring to obtain a three-layered film.

## EXAMPLE 5 AND COMPARATIVE EXAMPLES 7 AND 8

Polymers shown in Table 4 were subjected to T-die extrusion (take-off speed: shown in Table 3) using co-extruders (diameter: 65 mm, 40 mm, 40 mm) equipped with a three-layer die (width: 600 mm, die temperature: shown in Table 3) and cooled by a chill roll to prepare a film comprising three layers each having a thickness shown in Table 4.

## COMPARATIVE EXAMPLES 9 AND 10

Polymers shown in Table 4 were subjected to blown-film extrusion (take-off speed: shown in Table 3; blow-up ratio: 1.5) using an extruder (diameter: 65 mm) equipped with a die (diameter: 150 mm; single layer; spiral structure; die temperature: shown in Table 3) and cooled by a water cooling ring to prepare a single layer film whose thickness is shown in Table 4.

Table 3

| Example No. | Die Temperature ($^\circ$C) | Take-off Speed (m/min) |
|---|---|---|
| 3 | 270 | 2.5 |
| 4 | 280 | 3.0 |
| 5 | 270 | 2.5 |
| Comp. Ex. 5 | 210 | 3.0 |
| Comp. Ex. 6 | 280 | 6.0 |
| Comp. Ex. 7 | 270 | 6.5 |
| Comp. Ex. 8 | 270 | 2.5 |
| Comp. Ex. 9 | 200 | 3.0 |
| Comp. Ex. 10 | 270 | 2.5 |

8

Table 4

| Example No. | Density (g/cm³) | Percent Heat Shrinkage * (%) | Component of Melting Point of 117°C or less (wt%) | Inner Layer | | Intermediate Layer | | Outer Layer | |
|---|---|---|---|---|---|---|---|---|---|
| | | | | Kind | Thickness (μm) | Kind | Thickness (μm) | Kind | Thickness (μm) |
| 3 | 0.913 | 15 | 24 | PE(1) | 30 | PE(2) | 190 | PE(1) | 30 |
| 4 | 0.903 | 16 | 24 | PE(1) | 30 | PE(3) | 190 | PE(1) | 30 |
| 5 | 0.906 | 15 | 24 | PE(1) | 30 | PE(4) | 190 | PE(1) | 30 |
| Comp. Ex. 5 | 0.913 | 30 | 24 | PE(1) | 30 | PE(2) | 190 | PE(1) | 30 |
| Comp. Ex. 6 | 0.913 | 35 | 24 | PE(1) | 30 | PE(2) | 190 | PE(1) | 30 |
| Comp. Ex. 7 | 0.906 | 32 | 24 | PE(1) | 30 | PE(4) | 190 | PE(1) | 30 |
| Comp. Ex. 8 | 0.898 | - | 12 | PE(1) | 10 | PE(3) | 230 | PE(1) | 10 |
| Comp. Ex. 9 | 0.927 | 80 | 98 | - | - | PE(1) | 250 | - | - |
| Comp. Ex. 10 | 0.909 | - | 5 | - | - | PE(2) | 250 | - | - |

Note *: In MD at 120°C

A 500 ml-volume medical bag was produced from each of the above prepared films, and various characteristics of the bag were determined. The results obtained are shown in Table 5.

Table 5

| Example No. | Flexibility | | Transparency | | Heat-Sealability | Appearance |
|---|---|---|---|---|---|---|
| | Modulus in Tension (kg/cm$^2$) | Spontaneous Discharge Property | Visual Transparency | Haze (%) | | |
| 3 | 720 | excellent | excellent | 2.8 | excellent | excellent |
| 4 | 680 | excellent | excellent | 2.4 | excellent | excellent |
| 5 | 950 | excellent | good | 4.2 | excellent | good |
| Comp. Ex. 5 | 1,300 | good | poor | 8.0 | poor | very poor |
| Comp. Ex. 6 | 1,300 | good | poor | 7.4 | poor | very poor |
| Comp. Ex. 7 | 2,800 | very poor | poor | 15.0 | poor | very poor |
| Comp. Ex. 8 | - | - | - | - | - | - |
| Comp. Ex. 9 | 1,600 | poor | good | 4.5 | very poor | very poor |
| Comp. Ex. 10 | - | - | - | - | - | - |

The films of Comparative Examples 4, 8, and 10 could not be stably obtained due to bubble formation (Comparative Examples 4 and 10) or instable edges (Comparative Example 8).

The results of the foregoing Examples and Comparative Examples clearly demonstrate that the medical bags according to the present invention have not only satisfactory flexibility but excellent transparency as well as heat resistance and sealing properties.

Accordingly, characteristics of the medical bag of the present invention reside in:

(1) that they undergo no substantial wrinkling or deformation upon sterilization owing to the excellent heat resistance thereby providing a satisfactory appearance;

(2) that they cause no problems with respect to discharge of a liquid content because of excellent flexibility.

(3) that the content can easily be seen from the outside because of satisfactory transparency; and

(4) that they have a satisfactory appearance (free from wrinkles or deformation) and undergo almost no breaks.

While the invention has been described in detail and with reference to specific embodiments thereof, it will be apparent to one skilled in the art that various changes and modifications can be made therein without departing from the spirit and scope thereof.

## Claims

1. A medical bag made of a film mainly comprising low-density polyethylene and ethylene/1-olefin copolymer, the film having a density of 0.920 g/cm$^3$ or less, containing at least 15% by weight of a component having a melting point of 117° C or less, and having a percent heat shrinkage of not more than 20% in the machine direction at 120° C.

2. A medical bag as claimed in Claim 1, wherein the film comprises a mixture containing low-density polyethylene and an ethylene/1-olefin copolymer.

3. A medical bag as claimed in Claim 1, wherein the film comprises at least one layer comprising low-density polyethylene and at least one layer comprising an ethylene/1-olefin copolymer.

4. A medical bag as claimed in Claim 1, wherein the 1-olefin has 3 to 12 carbon atoms.

5. A medical bag as claimed in Claim 1, wherein the ethylene/1-olefin copolymer contains as a monomer unit 8 to 15 mol% of 1-olefin.

6. A medical bag as claimed in Claim 1, wherein the low-density polyethylene has a density of 0.930 g/cm$^3$ or less.

7. A medical bag as claimed in Claim 1, wherein the ethylene/1-olefin copolymer has a density of not more than 0.920 g/cm$^3$.

8. A medical bag as claimed in Claim 1, wherein the film comprises 10 to 50% by weight of low-density polyethylene and 50 to 90% by weight of an ethylene/1-olefin copolymer based on the weight of the film.

9. A medical bag as claimed in Claim 1, wherein the film has a thickness of 0.10 to 0.80 mm.